# EUROPEAN PATENT SPECIFICATION

(11) **EP 3 805 590 B1**
(45) Date of publication and mention of the grant of the patent: **07.12.2022**
(21) Application number: 19815193.8
(22) Date of filing: 04.06.2019
(51) Int. Cl.: F16D 65/18, F16D 121/04, F16D 121/24

(54) **BRAKE CALIPER**
BREMSSATTEL
ÉTRIER DE FREIN

(30) Priority: 08.06.2018 JP 2018109959; 26.09.2018 JP 2018180889
(43) Date of publication of application: 14.04.2021
(73) Proprietor: Matsushita, Fujito, 20125 Milan (IT)
(72) Inventor: Matsushita, Fujito, 20125 Milan (IT)
(74) Representative: Rings, Rolf
(86) International application number: PCT/JP2019/022074
(87) International publication number: WO 2019/235453

(56) References cited:
- EP-A2- 1 767 806
- DE-A1-102016 218 095
- JP-A- 2010 038 176
- JP-A- 2013 113 411
- JP-A- 2017 057 909
- US-A1- 2015 114 769
- US-A1- 2016 031 426
- US-A1- 2016 169 309
- US-A1- 2017 066 419

## Description

### TECHNICAL FIELD

The present invention relates to a brake caliper, and more particularly to a brake caliper for a disc brake.

### BACKGROUND ART

Currently, disc brakes are widely adopted as brakes for vehicles such as automobiles.

During sudden braking or braking on a slippery road surface, the slip condition of the wheel is detected to control the pressure of the brake fluid (hereinafter also referred to as brake fluid), and the slip generated by the lock of the wheel is prevented to prevent movement. A brake system is employed in a vehicle for securing direction stability and maneuverability and improving braking performance. That is, the wheel speed (rotational speed) is detected by the signal of the wheel speed sensor, the rotation state of the wheel is detected, the slip state of the wheel is measured or predicted, and the hydraulic system is controlled so that the wheel is not locked. As a hydraulic system control device, there is a motor direct acting control device which controls the pressure of brake fluid by driving a piston by an electric motor.

For example, some may add a signal that is a function of wheel deceleration, wheel slip, slip integral, and vehicle deceleration, and generate a pressure drop pulse when the sum reaches an instability threshold (eg, patent Reference 1).

When the wheel deceleration is measured and only one wheel falls below the current speed threshold, the wheel braking start threshold is raised to prevent the braking start triggered by this, thereby causing disturbance due to the traveling road Select the factors.

With the wheel rotating, the brake is applied and the wheel is completely locked, and the slip ratio occurring between the wheel and the road surface changes until the vehicle stops. In addition, the brake fluid pressure is controlled so that the coefficient of friction (with the tire) between the road surface and the wheel becomes a constant (ideal) numerical value. That is, the brake fluid pressure is increased until the slip ratio reaches the ideal slip ratio, and when the ideal slip ratio is exceeded, the brake fluid pressure is reduced and the maximum value of the friction coefficient is maintained to promote shortening of the braking distance and the friction coefficient of sideslip To ensure the stability and maneuverability of the vehicle in the high range. In a further prior art of US 2015/0114769A1, a brake apparatus including a brake caliper for a disc brake is disclosed, comprising a caliper body in which a hydraulic chamber for a brake fluid is formed. This apparatus includes within the caliper body a first cylinder/piston and a second cylinder/piston which receive a working fluid (brake fluid) and which are associated with the brake pad.

### Prior Art Literature

Prior Art Literature : DE 38 24 1977 A1

### Summary of the Invention

### Problems to be solved by the invention

However, although methods for controlling and executing vehicle behavior such as vehicle deceleration, tire slippage, and skidding are commonly equipped in modern vehicles, the brake fluid in the wheel brake calipers is usually A pump in an ABS (Anti-lock Brake System) actuator is pumped back into the master cylinder to control the fluid pressure and perform these controls.

In case the 2-channel type with front and rear wheel linkage, and in the device without G (acceleration) sensor, the braking power of the whole vehicle is lowered and not enough, due to much and follow the other wheels which the lowest grip (friction).In addition, differences in braking force occur due to part accuracy and aged deterioration.Furthermore, even in a system capable of independently controlling all wheels capable of independently braking front and rear, left and right wheels, as described above, the cylinder in the ABS actuator uses the brake fluid as a medium for the caliper of each braking device for front, rear, left and right Because pressure is transmitted through the duct and hydraulic tube, expansion of the hydraulic duct and tube, and other factors cause a delay or delay in operation, making quick control difficult.

In the braking system of a modern vehicle, not only the vehicle is decelerated and stopped, but the braking system is used to control the stability control of the vehicle, anti-slip, braking distribution control, traction control and the like. Furthermore, in the event of a collision of a vehicle, a collision safety device that controls after collision is also operated. It installs and controls accumulators etc. and transmits pressure via hydraulic ducts and hydraulic tubes. Therefore, expansion of the hydraulic duct and the tube and other factors cause a delay and delay of the operation, which makes quick control difficult, and the control thereof is also complicated. In addition, the increase in control equipment not only increases production costs but also increases vehicle weight and complicates maintenance and inspection.

The present invention has been made in view of such a situation, and aims to enable more reliable control, easier configuration, and easier maintenance.

### Means for Solving the Problems

This problem is solved by means of claim 1.

A brake caliper according to the present invention is a brake caliper for a disc brake, and a cavity having a predetermined internal volume in communication with a cylinder and a cylinder in which a piston pressing a brake pad on the disc side is displaceably stored. The cylinder body in which the storage section is formed, the brake fluid filled in the cylinder and the storage section, internal volume changing means for changing the internal volume of the storage section into and out of the storage section, the storage section The brake fluid is sealed by the cylinder body, the piston and the internal volume changing means so as to be isolated from the outside.

Since the brake fluid is sealed by the cylinder body, the piston and internal volume changing means are isolated from the outside, and the pressure of the brake fluid is changed only by the drive of the internal volume change means by the drive means, Therefore, the pressure of the brake fluid does not escape by the piping or other pressurizing device, the deceleration operation can be more reliably controlled only by the control of the drive means. Further, the drive means drives the inner volume changing means to move in and out of the storage section, and the force of the drive means is transmitted to the piston via the brake fluid, so the cross section of the inner volume change means is to the cross section of the piston. If the drive force of the drive means is small, sufficient braking force can be exerted. If the cross-sectional area of internal volume changing means is made larger than the cross-sectional area of the piston, the braking force is adjusted more finely Can control the deceleration operation more reliably. Since the brake fluid is sealed by the cylinder body, the piston and the internal volume changing means and isolated from the outside, the brake fluid is not connected to the external piping, and the configuration can be simpler. Since the brake fluid is sealed by the cylinder body, the piston and the internal volume changing means and isolated from the outside, the brake fluid can be maintained more easily without being connected with the external piping. Thus, more reliable control, simpler configuration, and easier maintenance.

### Effect of the Invention

As described above, according to the present invention, more reliable control, simpler configuration, and easier maintenance can be achieved.

### Brief Description of the Drawings

FIG. 1
   Fig.is a cross-sectional view showing an example of a configuration of a brake caliper 21.
FIG. 2
   Fig. is a cross-sectional view for explaining the operation of the brake caliper 21.
FIG. 3
   Fig. is a cross-sectional view for explaining the operation of the brake caliper 21.
FIG. 4
   Fig. is a cross-sectional view for explaining the operation of the brake caliper 21.
FIG. 5
   Fig. is a cross-sectional view showing an example of a configuration of a brake caliper 71.
FIG. 6
   Fig. is a cross-sectional view for explaining an example of the configuration of the brake caliper 71 and the operation thereof.
FIG. 7
   Fig. is a cross-sectional view for explaining an example of the configuration of the brake caliper 71 and the operation thereof.
FIG. 8
   Fig. is a cross-sectional view for explaining an example of the configuration of the brake caliper 71 and the operation thereof.
FIG. 9
   Fig. is a cross-sectional view showing an example of the configuration of a brake caliper 125.
FIG. 10
   Fig. is a cross-sectional view showing an example of the configuration of a brake caliper 171.

### Mode for carrying out the Invention

First, an outline of an embodiment of the present invention will be described.

In the brake caliper according to the embodiment of the present invention, the brake force is controlled by the pressure of brake oil by increasing or decreasing the volulme of the oil reservoir in the brake caliper, deploying the means for carry out movement of a sliding device capable of increasing or decreasing the volume of the oil reservoir in the caliper of the braking device, (For example, the actuator 35 and the piston 36 or the actuator 83 and the rotor 84 described later)
disposed linear actuators or rotary actuators, or other similar device that control the braking pressure in the brake calipers (For example, storage unit 42 or storage unit 92 described later)of each wheel.

The brake caliper is operated by means for prompting the movement of a linear motion actuator, a sliding device or the like by a motor, a magnetic field generator, a piezoelectric element or the like. The brake caliper operates based on a command from an electronic control unit (not shown) of the vehicle.That is, each of the brake calipers individually generates a braking force (pressure) by a command transmitted from the electronic device without delay, and the magnitude of the braking force (pressure) is controlled, firstly, the stability control of the vehicle Second, optimum braking, third, anti-slip, etc. are executed quickly. Further, the brake can be controlled even after the driver can not be steered or braked due to an impact or the like in an emergency or a collision.

In other words, the braking device of a vehicle according to the present invention is a braking device that controls braking force by increasing or decreasing hydraulic pressure by increasing or decreasing the volume of an oil reservoir in the caliper. According to the braking device of the vehicle of the present invention, the hydraulic pressure control mechanism installed in the caliper enables continuous control of all wheels individually and without delay or delay, and enables control of stability control, anti-skid, brake distribution control, traction control, and an anti-block system of the vehicle. In the braking system of a vehicle of the present invention, pressurization and decompression are carried out by means of linear actuators, sliding devices, etc., which promote movement by means of an electric motor, magnetic field generator, piezoelectric elements, etc., which operate based on commands from the vehicle's electronic control unit.

The present invention is not limited by the following examples for carrying out the present invention.

That is, in describing the embodiments of the present invention, a vehicle stability control device for controlling vehicle stability control, optimum braking, side slip prevention, etc., an antilock brake system, an electronically controlled braking distribution system, a side slip prevention device, etc. are known. From the point of the mechanism, the description of the generally known mechanical and mechanical / electronic control mechanisms will be omitted, and at the same time the correspondence between the configuration requirements of the present invention and the embodiments described in the description including the drawings will be shown. Also, the embodiments of the present invention will be more easily confirmed by the drawings and the explanation. Therefore, although it is described in the drawings and the description, when there is an embodiment which is not described here as an embodiment corresponding to the component of the present invention, the embodiment does not correspond to the component.

Here, vehicle attitude control devices such as a vehicle stability control device for controlling vehicle stability control, optimal braking, side slip prevention, etc., an antilock brake system, an electronically controlled braking distribution system, a side slip prevention device, etc. It relates to mixed species.

In the traveling control system, information necessary for traveling control of the vehicle includes wheel speed, detection of turning state, acceleration, fluid pressure, vehicle speed, inter-vehicle distance, depression of brake pedal, acceleration of displacement of brake pedal, accelerator pedal position, etc. Based on the signal from the sensor that detects the calculation, the evaluation circuit of the ECU (engine control unit) calculates and sets the target value of the braking system for each wheel, and the actuator (provided in the brake caliper of the braking system for each wheel). For example, the target value is transmitted to and operated by an actuator 35 or an actuator 83 described later.

In the driving control system, these series of operations are repeatedly performed as necessary, and calculation is continuously performed based on the feedback value, the target value is continuously updated, the vehicle stabilizer, the antilock brake system, Braking distribution system, anti-slip device, traction control system, automatic braking system, etc. Ensure stability and safety of vehicles etc.

In the normal deceleration and stop mode, the driving control system such as driving and braking assistance does not intervene, and when it becomes necessary to control the behavior in an emergency, etc., the driving control system intervenes quickly to ensure the stability and safety of the vehicle.

In the driving control system,
1) Vehicle stabilizer
2) Anti-lock brake system
3) Braking distribution system
4) anti-slip device
5) Traction control system
6) Automatic braking system

Control devices have been established to ensure vehicle stability, safety, etc.

Traditionally, to control these devices:
- Master cylinder
- Reservoir
- Relief valve
- accumulator
- Pressure detection device
- Backflow prevention valve
- Auto brake actuator
- ABS modulator
- Auxiliary hydraulic pump
- Pulsation mitigation and prevention device
- Brake pressure control valve
- Hydraulic piping connecting and operating the above-mentioned devices and devices
- A wide variety of devices and devices such as electrical wiring to promote operation The above are provided.

The provision of these devices not only increases the cost, but also causes the system to be complicated, difficult to maintain, and has low reliability.

In the present invention, since it is possible to eliminate the hydraulic equipment and hydraulic equipment as described above, it is possible to improve the reliability and simplify the maintenance inspection while reducing the manufacturing cost. In addition, since the hydraulic control related devices and devices become unnecessary, the weight of the vehicle can be reduced and fuel consumption can be improved.

The method of transmitting the operation to the brake caliper is not the transmission of the pressure through the brake fluid through the hydraulic piping but an electric signal, so that the power transmission efficiency can be improved. Thereby, in the anti-skid system, control such as stable control of the vehicle, optimum braking, anti-slip, etc. can be executed quickly and with high accuracy. The present invention also says that the hydraulic control device is installed in the caliper of the braking device, and each wheel is controlled independently, arbitrarily, and continuously based on a command from the electronic control device of the vehicle. It can also be done.

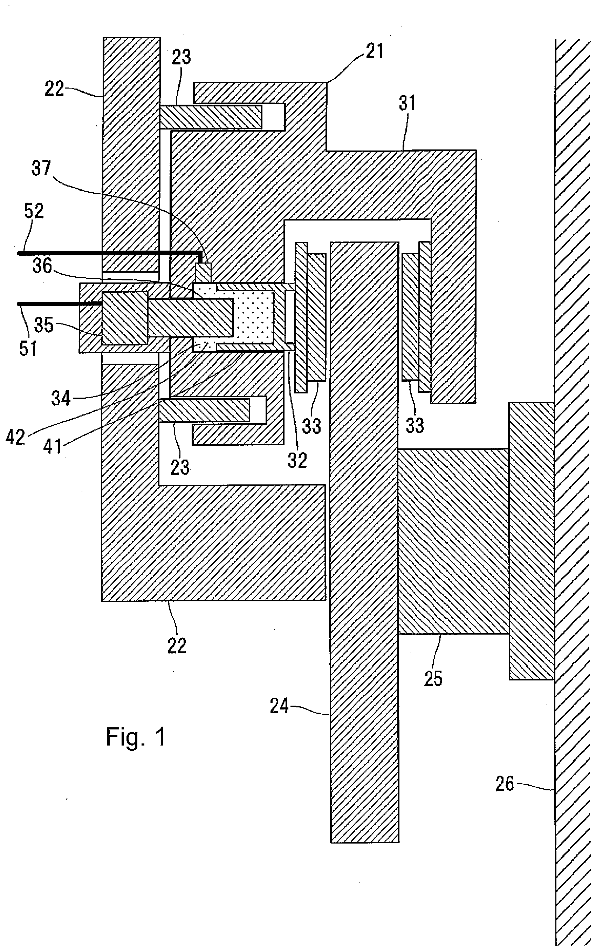

Hereinafter, a brake caliper according to an embodiment of the present invention will be described with reference to FIGS. 1 to 8.

First, the brake caliper 21 according to the first embodiment will be described with reference to FIGS. 1 to 4.

FIG. 1 is a cross-sectional view showing an example of the configuration of the brake caliper 21. As shown in FIG. The brake caliper 21 is a brake caliper for a disk brake provided on each of the wheels as a vehicle braking device. The brake caliper 21 is fixed to the vehicle body side of the vehicle by a mounting bracket 22. More specifically, the brake caliper 21 is supported by the mounting bracket 22 so as to be displaceable in the longitudinal direction of the slide pin 23 by the slide pin 23 of the mounting bracket 22. It is a caliper of a brake.

The brake caliper 21 sandwiches the brake disc (rotor) 24 to generate a frictional force to generate a resistance against the rotation of the brake disc 24.

The brake disc 24 is rotatably supported by the hub 25 with respect to the vehicle. The hub 25 is fixed a wheel 26 on which a tire (not shown) is mounted. That is, the brake disc 24 is fixed to the wheel 26 in the rotational direction. The resistance generated for the rotation of the brake disc 24 is transmitted to the wheel 26 and the tire, which generates a braking force on the vehicle.

The brake caliper 21 includes a cylinder body 31, a piston 32, a brake pad 33, a brake fluid 34, an actuator 35, a piston 36 and a sensor 37. The description of the piston seal or piston boot, pin boot, pad clip, shim, etc. is omitted.

The cylinder body 31 supports the piston 32, the brake pad 33, the brake fluid 34, the actuator 35, the piston 36 and the sensor 37. The cylinder body 31 is formed with high mechanical rigidity so as to reduce deformation even when pressure or force is applied to the piston 32, brake pad 33, brake fluid 34, actuator 35, piston 36 and sensor 37. For example, the cylinder body 31 is formed of a metal material such as an aluminum alloy or iron.

The cylinder body 31 stores the piston 32 in a displaceable manner. Further, the cylinder body 31 displaceably supports the brake pad 33 so that the brake pad 33 is also displaced according to the piston 32 when the piston 32 is displaced.

A cylinder 41 and a storage portion 42 are formed in the cylinder body 31. The cylinder 41 is formed in a cylindrical shape having an inner diameter corresponding to the outer diameter of the piston 32. Since the inner diameter of the cylinder 41 and the outer diameter of the piston 32 correspond to each other, the brake fluid 34 does not leak even when pressure is applied to the brake fluid 34.

The storage unit 42 is a hollow connected to the cylinder 41. That is, the storage portion 42 is formed as a hollow of a predetermined inner volume in communication with the cylinder 41. The internal volume of the storage portion 42 is equal to or more than the volume necessary for the piston 32 to be displaced. In other words, the internal volume of the storage portion 42 is equal to or greater than the volume at which the piston 32 moves in and out of the cylinder 41 when the piston 32 is displaced.

The storage portion 42 is shaped to allow the piston 36 to move in and out. The storage portion 42 is closed by a cylinder 41, a piston 32 inserted in the cylinder 41, a piston 36 and a sensor 37. For example, the storage portion 42 communicates with the cylinder 41 and is formed as a cylindrical hollow having an inner diameter equal to the inner diameter of the cylinder 41. For example, the shape of the cross section of the storage portion 42, which is perpendicular to the direction in which the piston 36 moves in and out, is the shape of the cross section of the cylinder 41. It is considered the same. Also, for example, the storage unit 42 is formed continuously with the cylinder 41

The piston 32 is a so-called caliper piston, and is formed in a cylindrical outer shape. The piston 32 is shaped so as not to interfere with the piston 36 entering and exiting the storage unit 42. For example, the piston 32 is formed in a hollow cylindrical shape in which a node closing in the bottom direction is provided.

The brake pad 33 is a friction member and sandwiches both surfaces of the brake disc 24 by the pressing of the piston 32 to generate a frictional force.

The brake fluid 34 is a liquid, which is also called a brake oil or the like, which is filled in the cylinder 41 and the storage portion 42. For example, the brake fluid 34 is a glycol-based liquid whose main component is polyethylene glycol monoether or a silicone-based liquid whose main component is dimethylpolysiloxane.

The actuator 35 is an example of a drive unit, and is moved into and out of the storage unit 42 by a power or an electrical signal supplied from an external drive circuit (not shown) or a control circuit (not shown) via the wiring 51. Drive the piston 36 electrically. The actuator 35 is a linear motion actuator. That is, the actuator 35 linearly displaces the piston 36 to move in and out of the storage unit 42. For example, the actuator 35 comprises a motor and a ball screw, and drives the piston 36. Also, for example, the actuator 35 includes a motor and a rack and pinion, and drives the piston 36.

The piston 36 is an example of an inner volume changing means, and is formed in a cylindrical shape or a rod shape such as a prismatic shape, and enters and exits the storage portion 42 in the length direction. For example, the piston 36 is formed in a solid (solid) rod-like shape. The piston 36 moves in and out of the storage unit 42 to change the internal volume of the storage unit 42. In other words, it can be said that the piston 36 moves in and out of the storage portion 42 to change the amount of the brake fluid 34 stored in the storage portion 42. The piston 36 is a hole provided in the cylinder body 31 and enters and exits the storage portion 42 through a hole corresponding to the cross-sectional shape of the piston 36 and the brake fluid 34 remains even when pressure is applied to the brake fluid 34. There is no leak.

The piston 36 is formed to have high mechanical rigidity. For example, the piston 36 is formed of a metal material such as an aluminum alloy or iron.

The cylinder body 31 is not provided with a configuration for connecting to an external hydraulic pipe such as a brake pipe or a brake hose. For example, the cylinder body 31 is not provided with a hole or the like for connecting a brake pipe or a brake hose for transmitting pressure from a brake booster or the like.

That is, the brake fluid 34 is sealed by the cylinder body 31, the piston 32 and the piston 36. The brake fluid 34 is isolated from the outside of the brake caliper 21. In this case, it can be said that the brake fluid 34 is isolated from the outside of the cylinder body 31. The pressure of the brake fluid 34 changes only by the actuation of the piston 36 by the actuator 35.

The sensor 37 is made of a magnetic sensor or the like and detects the position of the piston 36. The sensor 37 supplies a signal indicating the position of the piston 36 through the wiring 52 to an external drive circuit (not shown) or a control circuit (not shown).

The sensor 37 may be a piezoelectric sensor or the like, and may detect the pressure of the brake fluid 34. The sensor 37 may be a thermistor or the like to detect the temperature of the brake fluid 34. In this case, the sensor 37 supplies a signal indicating the pressure or temperature of the brake fluid 34 via the wiring 52 to an external drive circuit (not shown) or a control circuit (not shown).

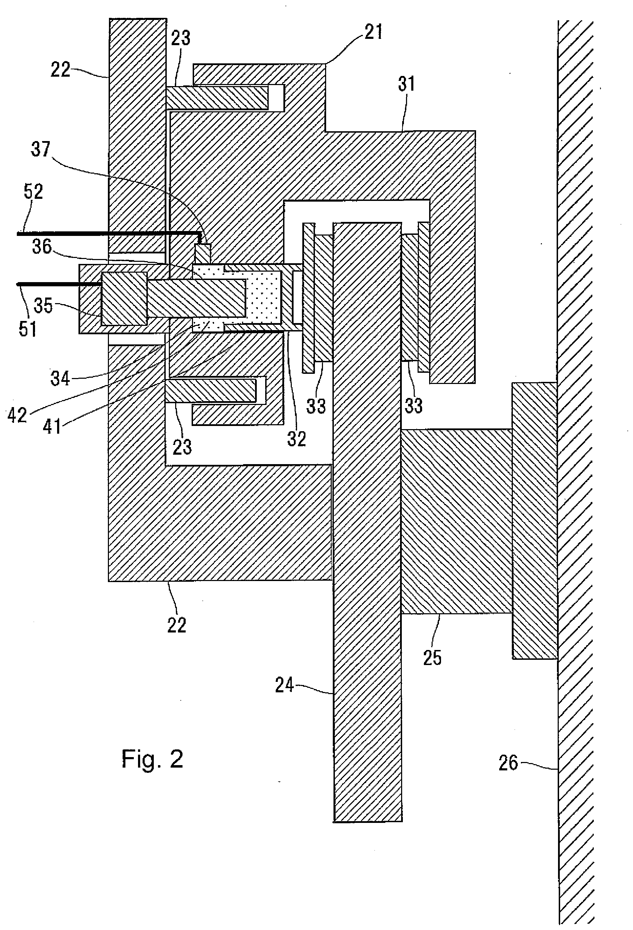

Next, the operation of the brake caliper 21 will be described with reference to FIGS. 2 to 4. FIG. 2 is a cross-sectional view for explaining the operation of the brake caliper 21 when braking.

The actuator 35 electrically drives the piston 36 so that it can be stored in the storage unit 42 by the power or electric signal supplied from the external drive circuit (not shown) or control circuit (not shown) via the wiring 51. That is, the actuator 35 linearly displaces the piston 36 in the right direction in FIG.

When the piston 36 enters the storage unit 42, the internal volume of the storage unit 42 decreases and the pressure of the brake fluid 34 increases. When the piston 36 enters the storage portion 42, the brake fluid 34 is pushed to the cylinder 41 side according to the decrease of the internal volume of the storage portion 42, so the piston 32 is displaced to the brake disc 24 side. Thereby, the brake pad 33 sandwiches the brake disc 24.

The piston 32 pushes the brake pad 33 toward the brake disc 24 with a force corresponding to the increase in pressure of the brake fluid 34, thereby generating a frictional force between the brake pad 33 and the brake disc 24. The frictional force is the generated resistance to the rotation of the brake disc 24. The resistance to the rotation of the brake disc 24 is transmitted to the wheel 26 and the tire, which generates a braking force on the vehicle.

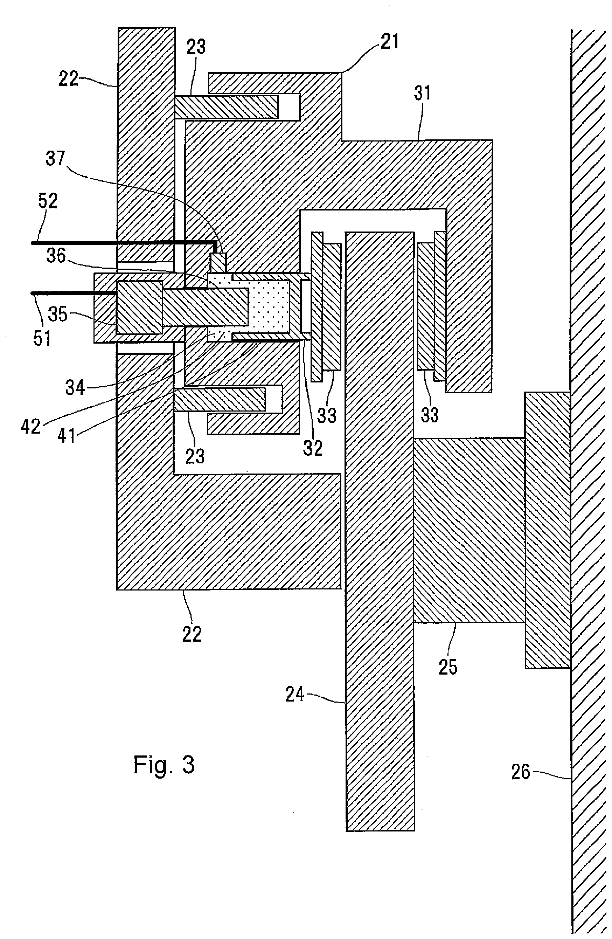

FIG. 3 is a cross-sectional view for explaining the operation of the brake caliper 21 when not braking.

The actuator 35 electrically drives the piston 36 to leave the storage unit 42 by the power or electric signal supplied from the external drive circuit (not shown) or the control circuit (not shown) through the wiring 51. That is, the actuator 35 linearly displaces the piston 36 in the left direction in FIG.

When the piston 36 comes out of the storage section 42, the internal volume of the storage section 42 increases and the pressure of the brake fluid 34 decreases. When the piston 36 comes out of the storage section 42, the brake fluid 34 is drawn toward the storage section 42 in response to the increase of the internal volume of the storage section 42, so the piston 32 is the side away from the brake disc 24. Displace. As a result, the brake pad 33 is not pressed to the brake disc 24 side, and the frictional force between the brake pad 33 and the brake disc 24 is reduced.

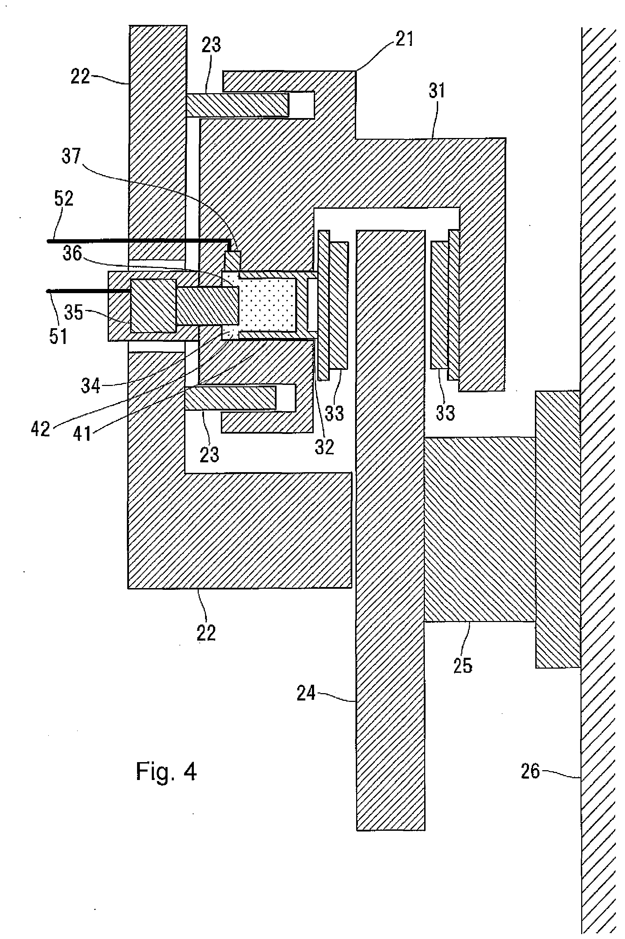

FIG. 4 is a cross-sectional view for explaining the operation of the brake caliper 21 in the case where the brake pad 33 is separated from the brake disk 24 and the sliding resistance is further reduced.

As compared with the case shown in FIG. 3, the actuator 35 is driven by the power or electric signal supplied from the external drive circuit (not shown) or the control circuit (not shown) via the wiring 51, compared with the case of Further, the piston 36 is driven by electric drive so as to further exit. That is, the actuator 35 further displaces the piston 36 linearly in the left direction in FIG.

When the piston 36 further moves out of the storage portion 42, the brake fluid 34 is further drawn toward the storage portion 42 in response to the increase of the internal volume of the storage portion 42, so that the piston 32 is removed from the brake disc 24. It is further displaced to the side away. As a result, since the piston 32 is separated from the brake pad 33, the frictional force between the brake pad 33 and the brake disc 24 does not occur. For example, in the case of coasting (landing / running), drag between the brake pad 33 and the brake disc 24 can be eliminated to reduce resistance.

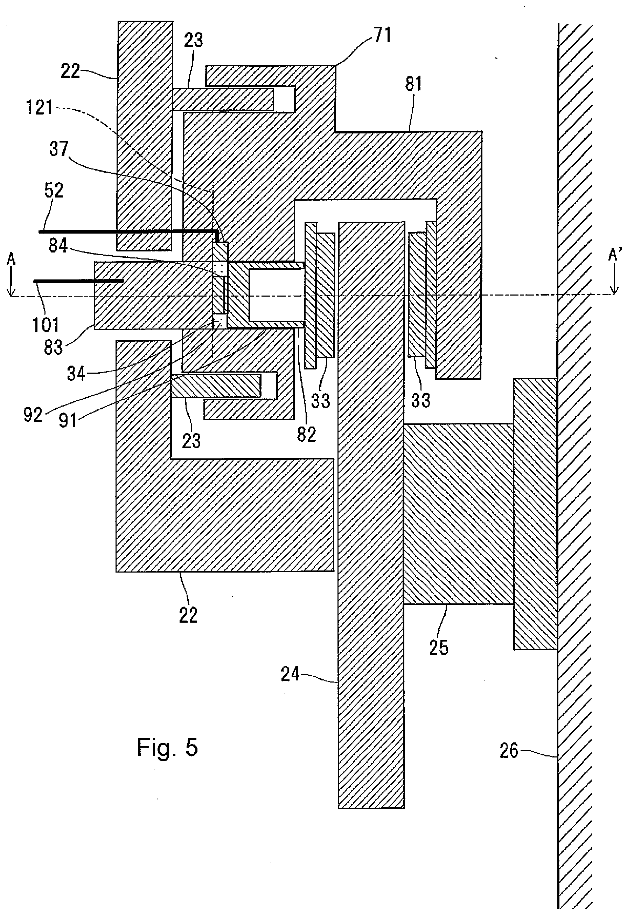

Next, a brake caliper 71 according to a second embodiment will be described with reference to FIGS. 5 to 8.

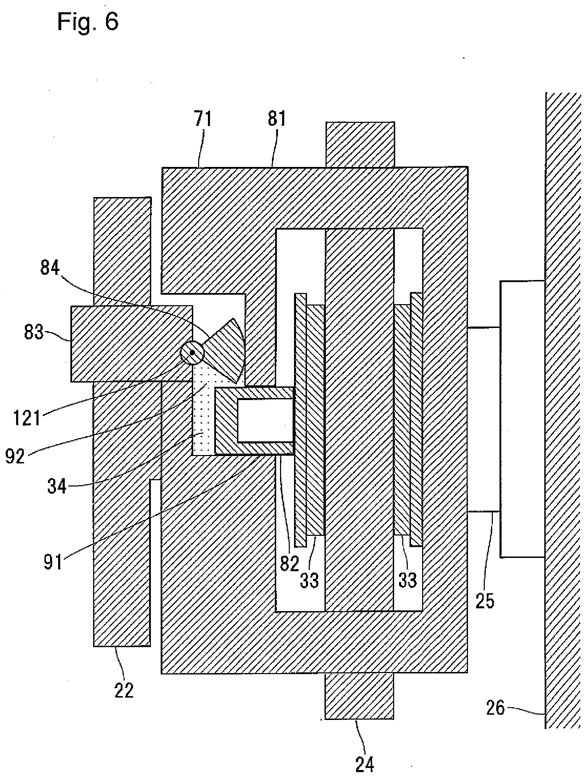

FIG. 5 is a cross-sectional view showing an example of the configuration of the brake caliper 71. As shown in FIG. 6 to 7 are cross-sectional views showing the cross section taken along the alternate long and short dash line AA 'of FIG. The brake caliper 71 is a brake caliper for a disc brake provided on each of the wheels as a braking device of the vehicle. The brake caliper 71 is fixed to the vehicle body side of the vehicle by the mounting bracket 22. More specifically, the brake caliper 71 is supported on the mounting bracket 22 so as to be displaceable in the longitudinal direction of the slide pin 23 by the slide pin 23 of the mounting bracket 22. It is a caliper of a brake.

The brake caliper 71 sandwiches the brake disc (rotor) 24 to generate a frictional force to generate resistance against the rotation of the brake disc 24. The brake disc 24 is rotatably supported by the hub 25 with respect to the vehicle. To the hub 25 is fixed a wheel 26 on which a tire (not shown) is mounted. That is, the brake disc 24 is fixed to the wheel 26 in the rotational direction. The resistance generated for the rotation of the brake disc 24 is transmitted to the wheel 26 and the tire, which generates a braking force on the vehicle.

The brake caliper 71 includes a cylinder body 81, a piston 82, a brake pad 33, a brake fluid 34, an actuator 83, a rotor 84 and a sensor 37. Hereinafter, the same parts as in the case shown in FIG. 1 are denoted by the same reference numerals, and the description thereof will be appropriately omitted. The description of the piston seal or piston boot, pin boot, pad clip, shim and the like is omitted.

The cylinder body 81 supports the piston 82, the brake pad 33, the brake fluid 34, the actuator 83, the rotor 84 and the sensor 37. The cylinder body 81 has a mechanically high rigidity so that it is less deformed even when pressure or force is applied to the piston 82, the brake pad 33, the brake fluid 34, the actuator 83, the rotor 84 and the sensor 37. It is formed. For example, the cylinder body 81 is formed of a metal material such as an aluminum alloy or iron.

The cylinder body 81 displaceably stores the piston 82. Further, the cylinder body 81 displaceably supports the brake pad 33 so that the brake pad 33 is also displaced according to the piston 82 when the piston 82 is displaced.

In the cylinder body 81, a cylinder 91 and a storage portion 92 are formed. The cylinder 91 is formed in a cylindrical shape having an inner diameter corresponding to the outer diameter of the piston 82. Since the inner diameter of the cylinder 91 and the outer diameter of the piston 82 correspond to each other, the brake fluid 34 does not leak even when pressure is applied to the brake fluid 34.

The storage unit 92 is a hollow connected to the cylinder 91. That is, the storage portion 92 is formed as a hollow of a predetermined internal volume in communication with the cylinder 91. The internal volume of the housing 92 is equal to or more than the volume required for the piston 82 to be displaced. In other words, the internal volume of the storage portion 92 is equal to or greater than the volume at which the piston 82 moves in and out of the cylinder 91 when the piston 82 is displaced.

The storage unit 92 is shaped so that the rotating rotor 84 can move in and out. The storage portion 92 is closed by a cylinder 91, a piston 82 inserted in the cylinder 91, a rotor 84 and a sensor 37. For example, the storage portion 92 is formed as a hollow of a square cross section extending to the side of the cylinder 91, which communicates with the cylinder 91. For example, the cross-sectional shape of the storage portion 92, which is orthogonal to the rotation shaft 121 of the rotor 84, is the cross-sectional shape of the rotor 84, and the rotation shaft 121 and the bottom surface of the rotor 84 are The shape of a cross section orthogonal to a line connecting the shaft 121 with the fan-shaped arc-shaped side surface of the rotor 84 formed in a fan-shaped columnar shape is made the same.

The piston 82 is a so-called caliper piston, and is formed in a cylindrical outer shape. For example, the piston 82 is formed in a hollow cylindrical shape in which one bottom surface on the brake pad 33 side is open and the other bottom surface is closed.

The actuator 83 is another example of the drive means, and moves in and out of the storage unit 92 by the power or electric signal supplied from the external drive circuit (not shown) or the control circuit (not shown) via the wiring 101. The rotor 84 is driven electrically so as to cause. The actuator 83 is a rotation actuator. That is, the actuator 83 displaces the angular position of the rotation of the rotor 84 and moves the storage unit 92 in and out.

For example, the actuator 83 includes a motor and a reduction mechanism, and rotates the rotor 84. Also, for example, the actuator 83 is composed of a servomotor or a stepping motor, and rotates the rotor 84.

The rotor 84 is another example of the internal volume changing means, and the bottom surface is formed in a fan-like columnar shape. The rotor 84 is an axis 121 oriented along the side, and is rotatably held by an axis 121 passing through the fan of the fan. The rotor 84 is pivoted about the shaft 121 and enters and exits the storage unit 92. The rotor 84 moves in and out of the storage unit 92 to change the internal volume of the storage unit 92. In other words, it can be said that the rotor 84 moves in and out of the storage unit 92 to change the amount of the brake fluid 34 stored by the storage unit 92.The bottom and side surfaces of the rotor 84 contact the inside of the housing 92 at any of the rotational angular positions of the rotor 84, and the rotor 84 seals the housing 92 so that pressure is applied to the brake fluid 34. Even if the brake fluid 34 does not leak.

The rotor 84 is formed to have high mechanical rigidity. For example, the rotor 84 is formed of a metal material such as aluminum alloy or iron.

The cylinder body 81 is not provided with a configuration for connecting to an external hydraulic pipe such as a brake pipe or a brake hose. For example, the cylinder body 81 is not provided with a hole for connecting a brake pipe or a brake hose for transmitting pressure from a brake booster or the like.

That is, the brake fluid 34 is sealed by the cylinder body 81, the piston 82 and the rotor 84. The brake fluid 34 is isolated from the outside of the cylinder body 81. The pressure of the brake fluid 34 changes only by the actuation of the rotor 84 by the actuator 83.

The sensor 37 is made of a magnetic sensor or the like and detects the position of the rotor 84. The sensor 37 supplies a signal indicating the position of the rotor 84 through the wiring 52 to an external drive circuit (not shown) or a control circuit (not shown).

Next, the operation of the brake caliper 71 will be described with reference to FIGS. 6 to 8. First, with reference to FIG. 6, the operation of the brake caliper 71 in the case of braking will be described.

The actuator 83 electrically drives the rotor 84 to put it into the retraction 92 by means of power or electrical signals supplied via wiring 101 from an external drive circuit (not shown) or control circuit (not shown). In other words, the actuator 83 rotates the rotor 84 clockwise in FIG. 6 to cause the rotor 84 to be placed in the retraction 92.

When the rotor 84 enters the housing 92, the internal volume of the housing 92 decreases and the pressure of the brake fluid 34 increases. When the rotor 84 enters the storage portion 92, the brake fluid 34 is pushed toward the cylinder 91 in accordance with the decrease in the internal volume of the storage portion 92, so the piston 82 is displaced toward the brake disc 24. Thereby, the brake pad 33 sandwiches the brake disc 24.

The piston 82 pushes the brake pad 33 toward the brake disc 24 with a force corresponding to the increase in pressure of the brake fluid 34, thereby generating a frictional force between the brake pad 33 and the brake disc 24. The frictional force is the generated resistance to the rotation of the brake disc 24. The resistance to the rotation of the brake disc 24 is transmitted to the wheel 26 and the tire, which generates a braking force on the vehicle.

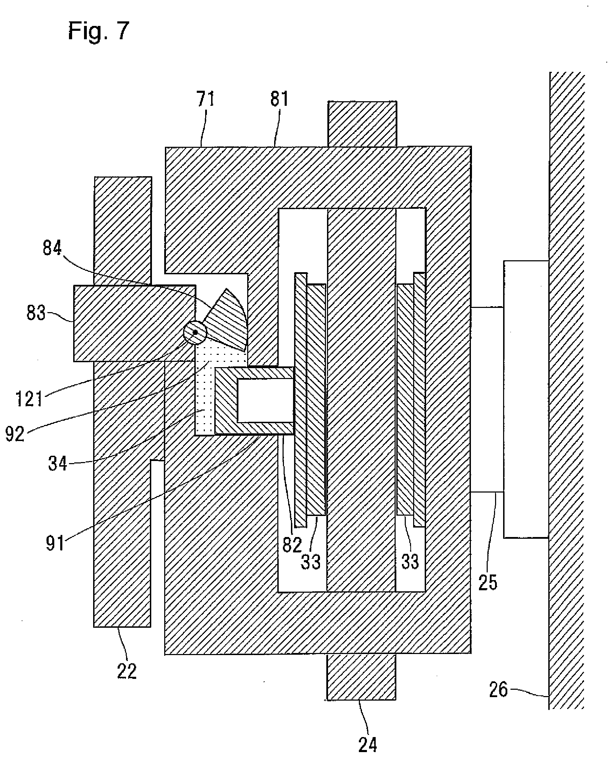

Next, with reference to FIG. 7, the operation of the brake caliper 71 when braking is not performed will be described.

The actuator 83 electrically drives the rotor 84 so as to leave the storage unit 92 by the power or electric signal supplied from the external drive circuit (not shown) or the control circuit (not shown) through the wiring 101. That is, the actuator 83 causes the rotor 84 to rotate counterclockwise in FIG.

As the rotor 84 exits the housing 92, the internal volume of the housing 92 increases and the pressure in the brake fluid 34 decreases. When the rotor 84 comes out of the storage section 92, the brake fluid 34 is drawn toward the storage section 92 in response to the increase in the internal volume of the storage section 92, so the piston 82 is the side away from the brake disc 24. Displace.

As a result, the brake pad 33 is not pressed to the brake disc 24 side, and the frictional force between the brake pad 33 and the brake disc 24 is reduced.

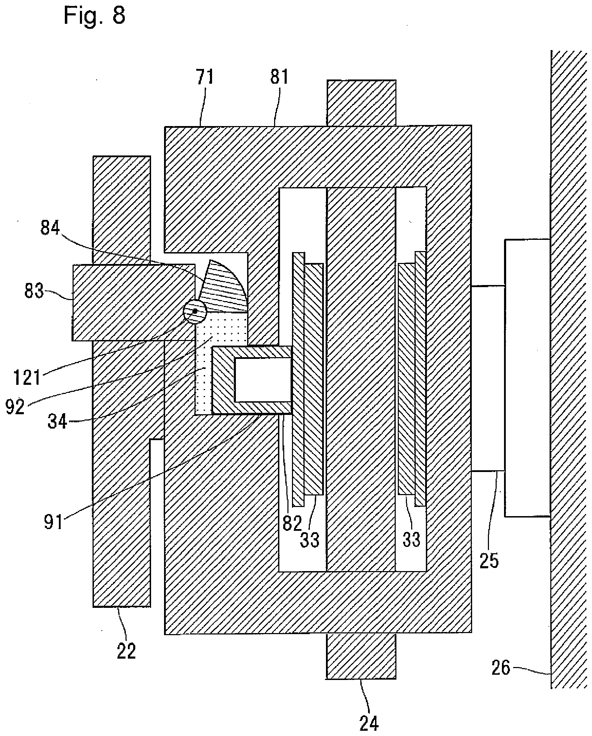

Further, with reference to FIG. 8, the operation of the brake caliper 71 in the case where the brake pad 33 is separated from the brake disc 24 and the sliding resistance is further reduced will be described.

As compared with the case shown in FIG. 3, the actuator 83 is driven by the power or electric signal supplied from the external drive circuit (not shown) or the control circuit (not shown) via the wiring 101, compared with the case of FIG. Further, the rotor 84 is electrically driven to exit. That is, the actuator 83 further rotates the rotor 84 in the counterclockwise direction in FIG.

As the rotor 84 further moves out of the storage section 92, the brake fluid 34 is further drawn toward the storage section 92 in response to the increase in the internal volume of the storage section 92. It is further displaced to the side away. As a result, since the piston 82 is separated from the brake pad 33, the frictional force between the brake pad 33 and the brake disc 24 is not generated.

For example, in the case of coasting (landing / running), drag between the brake pad 33 and the brake disc 24 can be eliminated to reduce resistance.

The brake caliper 21 or the brake caliper 71 may be an opposite type (opposite piston type).

Further, in the brake caliper 21 or the brake caliper 71, the number of pistons 32 or pistons 82 may be four, six, eight, ten, or the like.

The cylinder body 31 or the cylinder body 81 may have a two-piece structure consisting of two parts or a monoblock structure integrally formed.

The actuator 35 or the actuator 83 may be driven by a rotary electric motor, driven by a linear motor, or further driven by a solenoid or a piezoelectric element.

An oil reservoir for storing the brake fluid 34 in the cylinder body 31 or the cylinder body 81 and supplying it to the storage portion 42 or the storage portion 92, a hollow oil reservoir may be provided in communication with the storage unit 42 or 92 via a check valve that flows toward the storage unit 42 or storage unit 92 to stop the backflow. By doing this, the amount of the brake fluid 34 filled in the cylinder 41 or the cylinder 91 and the storage portion 42 or the storage portion 92 can be made constant.

A reservoir tank for storing the brake fluid 34 in the cylinder body 31 or the cylinder body 81 and supplying the stored brake fluid 34 to the storage unit 42 or 92. Reverse flow to the storage unit 42 or storage unit 92 to stop reverse flow. A reservoir tank communicating with the storage portion 42 or the storage portion 92 via a stop valve may be mounted. By doing this, the amount of the brake fluid 34 filled in the cylinder 41 or the cylinder 91 and the storage portion 42 or the storage portion 92 can be made constant.

Next, a brake caliper 125 according to a third embodiment will be described with reference to FIG. In the brake caliper 125, the brake pads are individually pressed against the brake disc (rotor) by two caliper pistons.

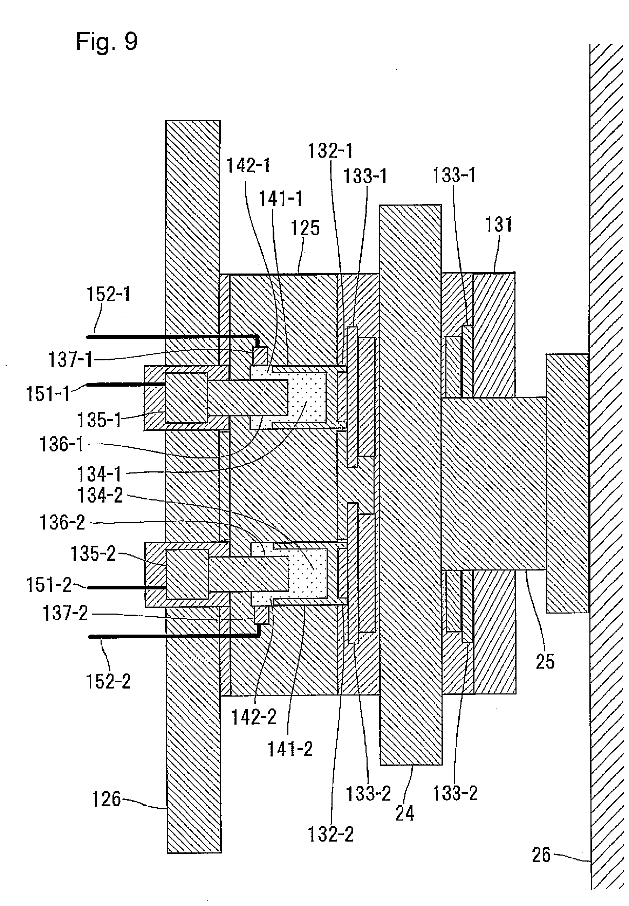

FIG. 9 is a cross-sectional view showing an example of the configuration of the brake caliper 125. As shown in FIG. Hereinafter, the same parts as in the case shown in FIG. 1 are denoted by the same reference numerals, and the description thereof will be appropriately omitted. The description of the piston seal or piston boot, pin boot, pad clip, shim and the like is omitted.

The brake caliper 125 is a brake caliper for a disk brake provided on each of the wheels as a vehicle braking device. The brake caliper 125 is fixed to the vehicle body side of the vehicle by a mounting bracket 126. More specifically, the brake caliper 125 is supported on the mounting bracket 126 so as to be displaceable in the longitudinal direction of the slide pin by the slide pin (not shown) of the mounting bracket 126. Type) Disc brake caliper.

The brake caliper 125 sandwiches the brake disc (rotor) 24 to generate a frictional force to generate resistance against the rotation of the brake disc 24. The brake caliper 125 includes a cylinder body 131, pistons 132-1 and 132-2, brake pads 133-1 and 133-2, brake fluid 134-1 and 134-2, actuators 135-1 and 135-2, piston 136- 1 and 136-2 and the sensors 137-1 and 137-2.

The cylinder body 131 includes pistons 132-1 and 132-2, brake pads 133-1 and 133-2, brake fluid 134-1 and 134-2, actuators 135-1 and 135-2, pistons 136-1 and 136-. 2 and the sensors 137-1 and 137-2 are formed to have high mechanical rigidity so as to reduce deformation even when pressure or force is applied. The cylinder body 131 includes pistons 132-1 and 132-2, brake pads 133-1 and 133-2, brake fluid 134-1 and 134-2, actuators 135-1 and 135-2, pistons 136-1 and 136-. 2 and the sensors 137-1 and 137-2 are formed to have high mechanical rigidity so as to reduce deformation even when pressure or force is applied. For example, the cylinder body 131 is formed of a metal material such as an aluminum alloy or iron.

The cylinder body 131 displaceably stores the pistons 132-1 and 132-2. Further, the cylinder body 131 is arranged such that, when the pistons 132-1 and 132-2 are displaced, the brake pads 133-1 and 133-2 are also displaced in accordance with the pistons 132-1 and 132-2. Support 1 and 133-2 displaceably.

The cylinder body 131 is formed with cylinders 141-1 and 141-2 and storage portions 142-1 and 142-2. The cylinder 141-1 is formed in a cylindrical shape having an inner diameter corresponding to the outer diameter of the piston 132-1. Since the inner diameter of the cylinder 141-1 corresponds to the outer diameter of the piston 132-1, the brake fluid 134-1 does not leak even when pressure is applied to the brake fluid 134-1. The cylinder 141-2 is formed in a cylindrical shape having an inner diameter corresponding to the outer diameter of the piston 132-2. Since the inner diameter of the cylinder 141-2 corresponds to the outer diameter of the piston 132-2, the brake fluid 134-2 does not leak even when pressure is applied to the brake fluid 134-2.

The cylinder 141-1 and the cylinder 141-2 are formed separately. That is, the cylinder 141-1 and the cylinder 141-2 do not communicate with each other but are independent.

The storage unit 142-1 is a hollow connected to the cylinder 141-1. That is, the storage portion 142-1 is formed as a hollow of a predetermined inner volume in communication with the cylinder 141-1. The internal volume of the storage portion 142-1 is set to be equal to or larger than the volume necessary for the piston 132-1 to be displaced. In other words, the internal volume of the storage portion 142-1 is equal to or greater than the volume at which the piston 132-1 moves in and out of the cylinder 141-1 when the piston 132-1 is displaced.

The storage portion 142-1 has a shape that allows the piston 136-1 to move in and out. The storage portion 142-1 is closed by the cylinder 141-1 and the piston 132-1, the piston 136-1 and the sensor 137-1 inserted in the cylinder 141-1. For example, the storage portion 142-1 communicates with the cylinder 141-1 and is formed as a cylindrical hollow having an inner diameter equal to the inner diameter of the cylinder 141-1. For example, the shape of the cross section of the storage portion 142-1 and the shape of the cross section perpendicular to the direction in which the piston 136-1 moves in and out is the shape of the cross section of the cylinder 141-1 and the piston 136-1 moves in and out It has the same shape as the cross section perpendicular to the direction. In addition, for example, the storage unit 142-1 is formed continuously with the cylinder 141-1.

The storage section 142-2 is a hollow connected to the cylinder 141-2. That is, the storage portion 142-2 is formed as a hollow of a predetermined inner volume in communication with the cylinder 141-2. The internal volume of the storage portion 142-2 is set to be equal to or larger than the volume necessary for the piston 132-2 to displace. In other words, the internal volume of the storage portion 142-2 is equal to or larger than the volume at which the piston 132-2 moves in and out of the cylinder 141-2 when the piston 132-2 is displaced.

The storage portion 142-2 is shaped to allow the piston 136-2 to move in and out. The storage portion 142-2 is closed by the cylinder 141-2, the piston 132-2 inserted in the cylinder 141-2, the piston 136-2, and the sensor 137-2. For example, the storage portion 142-2 communicates with the cylinder 141-2 and is formed as a cylindrical hollow having an inner diameter equal to the inner diameter of the cylinder 141-2. For example, the shape of the cross section of the storage section 142-2 and the shape of the cross section perpendicular to the direction in which the piston 136-2 moves in and out is the shape of the cross section of the cylinder 141-2 and the piston 136-2 moves in and out It has the same shape as the cross section perpendicular to the direction. Also, for example, the storage unit 142-2 is formed continuously with the cylinder 141-2.

The storage unit 142-1 and the storage unit 142-2 are separately formed. The storage unit 142-1 and the storage unit 142-2 do not communicate with each other and are independent. That is, the storage unit 142-1 and the storage unit 142-2 are isolated.

The piston 132-1 is a so-called caliper piston, and is formed in a cylindrical outer shape. The piston 132-1 is shaped so as not to interfere with the piston 136-1 entering and exiting the storage section 142-1. For example, the piston 132-1 is formed in a hollow cylindrical shape in which a node closing in the bottom direction is provided.

The piston 132-2 is a so-called caliper piston, and is formed in a cylindrical outer shape. The piston 132-2 is shaped so as not to interfere with the piston 136-2 entering and exiting the storage section 142-2. For example, the piston 132-2 is formed in a hollow cylindrical shape in which a node closing in the bottom direction is provided.

The brake pad 133-1 is a friction member and sandwiches both surfaces of the brake disc 24 by pressing of the piston 132-1 to generate a frictional force. The brake pad 133-2 is a friction member and sandwiches both surfaces of the brake disc 24 by pressing of the piston 132-2 to generate a frictional force.

The brake fluid 134-1 is a liquid, which is also referred to as a brake oil or the like, filled in the cylinder 141-1 and the storage portion 142-1. For example, the brake fluid 134-1 is a glycol-based liquid whose main component is polyethylene glycol monoether or a silicone-based liquid whose main component is dimethylpolysiloxane.

The brake fluid 134-2 is a liquid, which is also referred to as a brake oil or the like, filled in the cylinder 141-2 and the storage portion 142-2. For example, the brake fluid 134-2 is a glycol-based liquid whose main component is polyethylene glycol monoether, a silicone-based liquid whose main component is dimethylpolysiloxane, or the like.

The actuator 135-1 is an example of a drive unit, and the storage unit 142 is supplied with power or an electrical signal supplied from an external drive circuit (not shown) or a control circuit (not shown) via the wiring 151-1. The piston 136-1 is electrically driven to move in and out of -1. That is, the actuator 135-1 linearly displaces the piston 136-1 to move in and out of the storage section 142-1. For example, the actuator 135-1 includes a motor and a ball screw, and drives the piston 136-1. Also, for example, the actuator 135-1 includes a motor and a rack and pinion, and drives the piston 136-1.

The actuator 135-2 is an example of a drive unit, and the storage unit 142 is supplied with power or an electrical signal supplied from an external drive circuit (not shown) or a control circuit (not shown) via the wiring 151-2. The piston 136-2 is electrically driven to move in and out of -2. The actuator 135-2 is a linear motion actuator. That is, the actuator 135-2 linearly displaces the piston 136-2 to move in and out of the storage section 142-2. For example, the actuator 135-2 comprises a motor and a ball screw to drive the piston 136-2. Also, for example, the actuator 135-2 includes a motor and a rack and pinion, and drives the piston 136-2.

The piston 136-1 is an example of an internal volume changing means, and is formed in a rod shape such as a cylindrical or prismatic shape, and enters and exits the storage portion 142-1 in the length direction. For example, the piston 136-1 is formed in a solid (solid) bar shape. The piston 136-1 moves in and out of the storage portion 142-1 to change the internal volume of the storage portion 142-1. In other words, it can be said that the piston 136-1 moves in and out of the storage portion 142-1 to change the amount of the brake fluid 134-1 stored in the storage portion 142-1. The piston 136-1 is a hole provided in the cylinder body 131, and enters and exits the storage portion 142-1 through a hole corresponding to the cross sectional shape of the piston 136-1, and pressure is applied to the brake fluid 134-1. Brake fluid 134-1 will not leak.

The piston 136-1 is formed to have high mechanical rigidity. For example, the piston 136-1 is formed of a metal material such as an aluminum alloy or iron.

The piston 136-2 is an example of an inner volume changing means, and is formed in a rod shape such as a cylindrical or prismatic shape, and enters and exits the storage portion 142-2 in the length direction. For example, the piston 136-2 is formed in a solid (solid) bar shape. The piston 136-2 moves in and out of the storage section 142-2 to change the internal volume of the storage section 142-2. In other words, it can be said that the piston 136-2 moves in and out of the storage section 142-2 to change the amount of the brake fluid 134-2 stored in the storage section 142-2. The piston 136-2 is a hole provided in the cylinder body 131, and enters and exits the storage section 142-2 through a hole corresponding to the sectional shape of the piston 136-2, and pressure is applied to the brake fluid 134-2. Even if the brake fluid is released, the brake fluid 134-2 will not leak.

The piston 136-2 is formed to have high mechanical rigidity. For example, the piston 136-2 is formed of a metal material such as aluminum alloy or iron.

The cylinder body 131 is not provided with a configuration for connecting to an external hydraulic pipe such as a brake pipe or a brake hose. For example, the cylinder body 131 is not provided with a hole or the like for connecting a brake pipe or a brake hose for transmitting pressure from a brake booster or the like.

That is, the brake fluid 134-1 is sealed by the cylinder body 131, the piston 132-1 and the piston 136-1. The brake fluid 134-1 is isolated from the outside of the brake caliper 125. In this case, it can be said that the brake fluid 134-1 is isolated from the outside of the cylinder body 131. The pressure of the brake fluid 134-1 changes only by the actuation of the piston 136-1 by the actuator 135-1.

The brake fluid 134-2 is sealed by the cylinder body 131, the piston 132-2 and the piston 136-2. The brake fluid 134-2 is isolated from the outside of the brake caliper 125. In this case, it can be said that the brake fluid 134-2 is isolated from the outside of the cylinder body 131. The pressure of the brake fluid 134-2 changes only by the actuation of the piston 136-2 by the actuator 135-2.

The sensor 137-1 is made of a magnetic sensor or the like and detects the position of the piston 136-1. The sensor 137-1 supplies a signal indicating the position of the piston 136-1 to an external drive circuit (not shown) or a control circuit (not shown) via the wiring 152-1. The sensor 137-2 comprises a magnetic sensor or the like and detects the position of the piston 136-2. The sensor 137-2 supplies a signal indicating the position of the piston 136-2 to an external drive circuit (not shown) or a control circuit (not shown) via the wiring 152-2.

The sensor 137-1 may be a piezoelectric sensor or the like, and may detect the pressure of the brake fluid 134-1. The sensor 137-1 may be a thermistor or the like to detect the temperature of the brake fluid 134-1. In this case, the sensor 137-1 supplies a signal indicating the pressure or temperature of the brake fluid 134-1 to the external drive circuit (not shown) or control circuit (not shown) via the wiring 152-1.

The sensor 137-2 may be a piezoelectric sensor or the like, and may detect the pressure of the brake fluid 134-2. The sensor 137-2 may be a thermistor or the like to detect the temperature of the brake fluid 134-2. In this case, the sensor 137-2 supplies a signal indicating the pressure or temperature of the brake fluid 134-2 to an external drive circuit (not shown) or a control circuit (not shown) via the wire 152-2.

In the brake caliper 125, the system of the piston 132-1, the brake pad 133-1, the brake fluid 134-1, the actuator 135-1, the piston 136-1 and the sensor 137-1, the cylinder 141-1 and the storage unit 142-1 and ,the sensor 137-1 and the system of the cylinder 141-1 and the storage portion 142-1, the piston 132-2, the brake pad 133-2, the brake fluid 134-2, the actuator 135-2, the piston 136-2, and the sensor 137- 2 and the system of the cylinder 141-2 and the storage section 142-2 are independent, it is possible to generate the braking force in the other system even if one system fails.

In the brake caliper 125, the piston 132-1, the brake pad 133-1, the brake fluid 134-1, the actuator 135-1, the piston 136-1, and the sensor 137-1 And the system of the cylinder 141-1 and the storage section 142-1, the piston 132-2, the brake pad 133-2, the brake fluid 134-2, the actuator 135-2, the piston 136-2, and the sensor 137-2 and the system of the cylinder 141-2 and the storage unit 142-2 are described as being independently provided. not only this but multiple systems, such as three systems or four systems, can be provided.

Further, in the brake caliper 125, the diameter of the piston 132-1 and the diameter of the piston 132-2 may be the same diameter or different diameters.

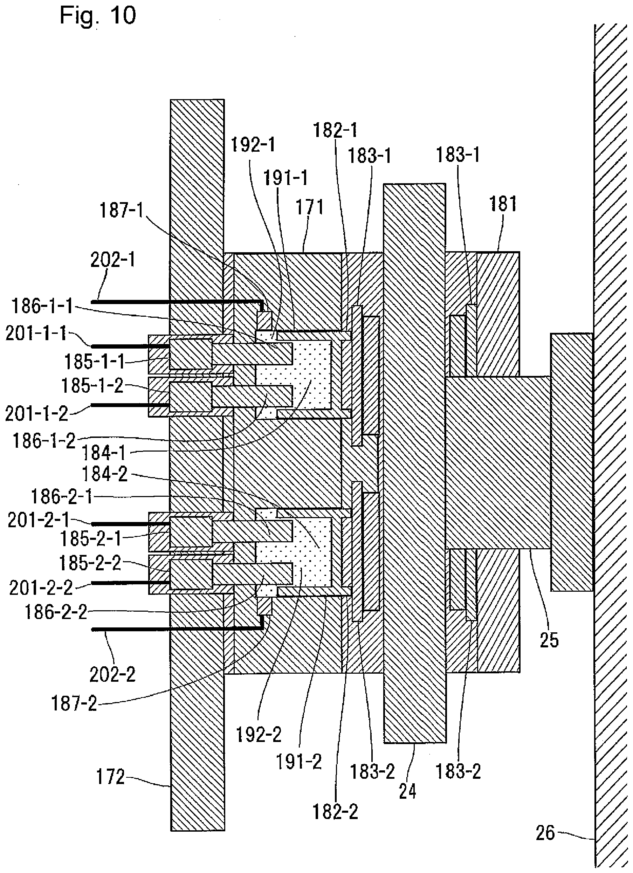

Next, with reference to FIG. 10, the brake caliper 171 of the fourth embodiment will be described. In the brake caliper 171, the brake pads are individually pressed against the brake disc (rotor) by two caliper pistons. Further, in the brake caliper 171, a plurality of pistons driven by each move in and out of one storage unit to change the internal volume of the storage unit.

FIG. 10 is a cross-sectional view showing an example of the configuration of the brake caliper 171. As shown in FIG. Hereinafter, the same parts as in the case shown in FIG. 1 are denoted by the same reference numerals, and the description thereof will be appropriately omitted. The description of the piston seal or piston boot, pin boot, pad clip, shim and the like is omitted.

The brake caliper 171 is a brake caliper for a disk brake provided on each of the wheels as a vehicle braking device. The brake caliper 171 is fixed to the vehicle body side of the vehicle by a mounting bracket 172. More specifically, the brake caliper 171 is supported by the mounting bracket 172 so as to be displaceable in the longitudinal direction of the slide pin by the slide pin (not shown) of the mounting bracket 172. It is a caliper of a so-called floating type (floating type / single pressing type) disc brake.

The brake caliper 171 sandwiches the brake disc (rotor) 24 to generate a frictional force to generate a resistance against the rotation of the brake disc 24. The Brake caliper 171 is composed with cylinder body 181, pistons 182-1 and 182-2, brake pads 183-1 and 183-2, brake fluid 184-1 and 184-2, actuators 185-1-1, 185-1-2, 185-2- 1 and 185-2-2, pistons 186-1-1, 186-1-2, 186-2-1And 186-2-2 and also include sensors 187-1 and 187-2.

The cylinder body 181 includes pistons 182-1 and 182-2, brake pads 183-1 and 183-2, brake fluid 184-1 and 184-2, actuators 185-1-1, 185-1-2, 185-2. -1 and 185-2-2, pistons 186-1-1, 186-1-2, 186-2-1 and 186-2-2 and supporting sensors 187-1 and 187-2. The cylinder body 181 includes pistons 182-1 and 182-2, brake pads 183-1 and 183-2, brake fluid 184-1 and 184-2, actuators 185-1-1, 185-1-2, 185-2. -1 also 185-2-2, pistons 186-1-1, 186-1-2, 186-2-1 and 186-2-2 and sensors 187-1 and 187-2 under pressure or force However, it is formed to have high mechanical rigidity so as to reduce deformation. For example, the cylinder body 181 is formed of a metal material such as an aluminum alloy or iron.

The cylinder body 181 displaceably stores the pistons 182-1 and 182-2. Also, the cylinder body 181 is arranged such that, when the pistons 182-1 and 182-2 are displaced, the brake pads 183-1 and 183-2 are also displaced in accordance with the pistons 182-1 and 182-2. Support 1 and 183-2 displaceably.

In the cylinder body 181, cylinders 191-1 and 191-2 and storage portions 192-1 and 192-2 are formed. The cylinder 191-1 is formed in a cylindrical shape having an inner diameter corresponding to the outer diameter of the piston 182-1. Since the inner diameter of the cylinder 191-1 corresponds to the outer diameter of the piston 182-1, the brake fluid 184-1 does not leak even when pressure is applied to the brake fluid 184-1. The cylinder 191-2 is formed in a cylindrical shape having an inner diameter corresponding to the outer diameter of the piston 182-2. Since the inner diameter of the cylinder 191-2 corresponds to the outer diameter of the piston 182-2, the brake fluid 184-2 does not leak even when pressure is applied to the brake fluid 184-2.

The cylinder 191-1 and the cylinder 191-2 are formed separately. That is, the cylinder 191-1 and the cylinder 191-2 do not communicate with each other but are independent.

The storage section 192-1 is a hollow connected to the cylinder 191-1. That is, the storage portion 192-1 is formed as a hollow of a predetermined inner volume in communication with the cylinder 191-1. The internal volume of the storage portion 192-1 is set to be equal to or larger than the volume necessary for the piston 182-1 to be displaced. In other words, the internal volume of the storage section 192-1 is equal to or greater than the volume at which the piston 182-1 moves in and out of the cylinder 191-1 when the piston 182-1 is displaced.

The storage portion 192-1 is shaped to allow the pistons 186-1-1 and 186-1-2 to move in and out. The storage portion 192-1 is closed by a cylinder 191-1, a piston 182-1 inserted in the cylinder 191-1, pistons 186-1-1 and 186-1-2 and a sensor 187-1. For example, the storage portion 192-1 communicates with the cylinder 191-1 and is formed as a cylindrical hollow having an inner diameter equal to the inner diameter of the cylinder 191-1. For example, the shape of the cross section of the storage portion 192-1, which is perpendicular to the direction in which the pistons 186-1-1 and 186-1-2 move in and out, is the shape of the cross section of the cylinder 191-1. The shape of the cross section perpendicular to the direction in which the piston 186-1 moves in and out is the same. In addition, for example, the storage section 192-1 is formed continuously with the cylinder 191-1.

The storage section 192-2 is a hollow connected to the cylinder 191-2. That is, the storage section 192-2 is formed as a cavity having a predetermined inner volume in communication with the cylinder 191-2. The internal volume of the storage section 192-2 is greater than or equal to the volume required for the piston 182-2 to displace. In other words, the internal volume of the storage section 192-2 is equal to or greater than the volume at which the piston 182-2 moves in and out of the cylinder 191-2 when the piston 182-2 is displaced.

The storage section 192-2 is shaped to allow the pistons 186-2-1 and 186-2-2 to move in and out. The storage section 192-2 is closed by a cylinder 191-2, a piston 182-2 inserted in the cylinder 191-2, pistons 186-2-1 and 186-2-2 and a sensor 187-2. For example, the storage portion 192-2 communicates with the cylinder 191-2 and is formed as a cylindrical hollow having an inner diameter equal to the inner diameter of the cylinder 191-2. For example, the shape of the cross section of the storage section 192-2, which is perpendicular to the direction in which the pistons 186-2-1 and 186-2-2 move in and out, is the shape of the cross section of the cylinder 191-2. The shape of the cross section perpendicular to the direction in which the piston 186-2 moves in and out is the same.

Further, for example, the storage section 192-2 is formed continuously with the cylinder 191-2.

The storage unit 192-1 and the storage unit 192-2 are formed separately. The storage portion 192-1 and the storage portion 192-2 do not communicate with each other and are independent. That is, the storage unit 192-1 and the storage unit 192-2 are isolated.

The piston 182-1 is a so-called caliper piston, and is formed in a cylindrical outer shape. The piston 182-1 is shaped so as not to interfere with the pistons 186-1-1 and 186-1-2 entering and exiting the storage section 192-1. For example, the piston 182-1 is formed in a hollow cylindrical shape in which a node closing in the bottom direction is provided.

The piston 182-2 is a so-called caliper piston, and is formed in a cylindrical outer shape. The piston 182-2 is shaped so as not to interfere with the pistons 186-2-1 and 186-2-2 entering and exiting the storage section 192-2.

For example, the piston 182-2 is formed in a hollow cylindrical shape in which a node closing in the bottom direction is provided.

The brake pad 183-1 is a friction member and sandwiches both surfaces of the brake disc 24 by pressing of the piston 182-1 to generate a frictional force. The brake pad 183-2 is a friction member, and presses the piston 182-2 to pinch both sides of the brake disc 24 to generate a frictional force.

The brake fluid 184-1 is a liquid, which is also called a brake oil, filled in the cylinder 191-1 and the storage section 192-1. For example, the brake fluid 184-1 is a glycol-based liquid whose main component is polyethylene glycol monoether, a silicone-based liquid whose main component is dimethylpolysiloxane, or the like.

The brake fluid 184-2 is a liquid, which is also referred to as a brake oil or the like, filled in the cylinder 191-2 and the storage section 192-2. For example, the brake fluid 184-2 is a glycol-based liquid whose main component is polyethylene glycol monoether or a silicone-based liquid whose main component is dimethylpolysiloxane.

The actuator 185-1-1 is an example of a drive unit, and is supplied by power or an electric signal supplied from an external drive circuit (not shown) or control circuit (not shown) via the wiring 201-1-1 The piston 186-1-1 is electrically driven to move the storage unit 19-1 in and out. The actuator 185-1-1 is a linear motion actuator. That is, the actuator 185-1-1 linearly displaces the piston 186-1-1 to move in and out of the storage section 192-1. The actuator 185-1-2 is an example of a drive unit, and is supplied by a power or an electric signal supplied from an external drive circuit (not shown) or control circuit (not shown) through the wiring 201-1-2. The piston 186-1-2 is electrically driven to move the storage portion 192-1 into and out of the storage portion 192-1. The actuators 185-1-2 are linear motion actuators. That is, the actuator 185-1-2 linearly displaces the piston 186-1-2 to move in and out of the storage section 192-1. For example, the actuators 185-1-1 and 185-1-2 consist of a motor and a ball screw, respectively, and drive the pistons 186-1-1 and 186-1-2 respectively. Also, for example, the actuators 185-1-1 and 185-1-2 consist of a motor and a rack and pinion, respectively, and drive the pistons 186-1-1 and 186-1-2 respectively.

The actuator 185-2-1 is an example of a drive unit, and is supplied with power or an electric signal supplied from an external drive circuit (not shown) or control circuit (not shown) via the wiring 201-2-1 The piston 186-2-1 is electrically driven to move the storage portion 192-2 in and out. The actuator 185-2-1 is a linear motion actuator. That is, the actuator 185-2-1 linearly displaces the piston 186-2-1 to move in and out of the storage section 192-2. The actuator 185-2-2 is an example of a drive unit, and is supplied with power or an electric signal supplied from an external drive circuit (not shown) or control circuit (not shown) via the wiring 201-2-2. The piston 186-2-2 is electrically driven to move the storage portion 192-2 in and out. The actuator 185-2-2 is a linear motion actuator. That is, the actuator 185-2-2 linearly displaces the piston 186-2-2 to move in and out of the storage section 192-2. For example, actuators 185-2-1 and 185-2-2 consist of a motor and a ball screw, respectively, and drive pistons 186-2-1 and 186-2-2, respectively. Also, for example, the actuators 185-2-1 and 185-2-2 consist of a motor and a rack and pinion, respectively, and drive the pistons 186-2-1 and 186-2, respectively.

The piston 186-1-1 is an example of the internal volume changing means, and is formed in a cylindrical shape or a rod shape such as a prismatic shape, and enters and exits the storage portion 192-1 in the length direction. For example, the piston 186-1-1 is formed in a solid (solid) rod-like shape. The piston 186-1-1 moves in and out of the storage section 192-1 to change the internal volume of the storage section 192-1. In other words, it can be said that the piston 186-1-1 changes the amount of the brake fluid 184-1 stored in and out of the storage portion 192-1 and stored in the storage portion 192-1. The piston 186-1-1 is a hole provided in the cylinder body 181, and enters and exits the storage section 19-1 through a hole corresponding to the sectional shape of the piston 186-1-1, and the brake fluid 184-1 Even if pressure is applied to the brake fluid, the brake fluid 184-1 does not leak.

The piston 186-1-2 is an example of the internal volume changing means, and is formed in a rod shape such as a cylindrical or prismatic shape, and enters and exits the storage portion 192-1 in the length direction. For example, the piston 186-1-2 is formed in a solid (solid) bar shape with an internal plugging. The piston 186-1-2 moves in and out of the storage portion 192-1 to change the internal volume of the storage portion 192-1. In other words, it can be said that the piston 186-1-2 moves in and out of the storage portion 192-1 to change the amount of the brake fluid 184-1 stored in the storage portion 192-1. The piston 186-1-2 is a hole provided in the cylinder body 181, and enters and exits the storage portion 19-1 through a hole corresponding to the cross-sectional shape of the piston 186-1-2, and the brake fluid 184-1 Even if pressure is applied to the brake fluid, the brake fluid 184-1 does not leak.

The pistons 186-1-1 and 186-1-2 are each formed to have high mechanical rigidity. For example, the pistons 186-1-1 and 186-1-2 are each formed of a metal material such as aluminum alloy or iron.

The piston 186-2-1 is an example of an internal volume changing means, and is formed in a rod shape such as a cylindrical or prismatic shape, and enters and exits the storage portion 192-2 in the length direction. For example, the piston 186-2-1 is formed in a solid (solid) bar shape with an internal plugging. The piston 186-2-1 moves in and out of the storage section 192-2 to change the internal volume of the storage section 192-2. In other words, it can be said that the piston 186-2-1 moves in and out of the storage portion 192-2 to change the amount of the brake fluid 184-2 stored in the storage portion 192-2. The piston 186-2-1 is a hole provided in the cylinder body 181, and enters and exits the storage section 192-2 through a hole corresponding to the cross-sectional shape of the piston 186-2-1. Even if pressure is applied to the brake fluid, the brake fluid 184-2 does not leak.

The piston 186-2-2 is an example of an inner volume changing means, and is formed in a cylindrical shape or a rod shape such as a prismatic shape, and moves in and out of the storage portion 192-2 in the length direction. For example, the piston 186-2-2 is formed in a solid (solid) bar-like shape. The piston 186-2-2 moves in and out of the storage section 192-2 to change the internal volume of the storage section 192-2. In other words, it can be said that the piston 186-2-2 moves in and out of the storage portion 192-2 to change the amount of the brake fluid 184-2 stored by the storage portion 192-2. The piston 186-2-2 is a hole provided in the cylinder body 181, and enters and exits the storage section 192-2 through a hole corresponding to the cross-sectional shape of the piston 186-2-2, and the brake fluid 184-2 Even if pressure is applied to the brake fluid, the brake fluid 184-2 does not leak.

The pistons 186-2-1 and 186-2-2 are each formed to have high mechanical rigidity. For example, the pistons 186-2-1 and 186-2-2 are respectively formed of a metal material such as an aluminum alloy or iron.

The cylinder body 181 is not provided with a configuration for connecting to an external hydraulic pipe such as a brake pipe or a brake hose. For example, the cylinder body 181 is not provided with a hole or the like for connecting a brake pipe or a brake hose for transmitting pressure from a brake booster or the like.

That is, the brake fluid 184-1 is sealed by the cylinder body 181, the piston 182-1 and the pistons 186-1-1 and 186-1-2. The brake fluid 184-1 is isolated from the outside of the brake caliper 171. In this case, it can be said that the brake fluid 184-1 is isolated from the outside of the cylinder body 181. The pressure of the brake fluid 184-1 changes only by the drive of the piston 186-1-1 by the actuator 185-1-1 and the drive of the piston 186-1-2 by the actuator 185-1-2.

Also,the brake fluid 184-2 is sealed by the cylinder body 181, the piston 182-2 and the pistons 186-2-1 and 186-2-2. The brake fluid 184-2 is isolated from the outside of the brake caliper 171. In this case, it can be said that the brake fluid 184-2 is isolated from the outside of the cylinder body 181. The pressure of the brake fluid 184-2 changes only by the drive of the piston 186-2-1 by the actuator 185-2-1 and the drive of the piston 186-2-2 by the actuator 185-2-2.

The sensor 187-1 comprises a piezoelectric sensor or the like, and detects the pressure of the brake fluid 184-1. The sensor 187-1 supplies a signal indicating the pressure of the brake fluid 184-1 to the external drive circuit (not shown) or control circuit (not shown) via the wire 202-1. The sensor 187-2 comprises a piezoelectric sensor or the like, and detects the pressure of the brake fluid 184-2. The sensor 187-2 supplies a signal indicating the pressure of the brake fluid 184-2 to an external drive circuit (not shown) or a control circuit (not shown) via the wire 202-2.

The sensors 187-1 and 187-2 may each be a thermistor or the like, and may detect the temperature of each of the brake fluid 184-1 and 184-2. Also, the sensors 187-1 and 187-2 may consist of magnetic sensors, and may detect the positions of the pistons 186-1-1 and 186-1-2 or the pistons 186-2-1 and 186-2-2. In this case, the sensors 187-1 and 187-2 are respectively connected to the pistons 186-1-1 and 186-1-2 or the pistons 186-2-1 and 186-2- via the wire 202-1 or 202-2. A signal indicating the position of 2 or a signal indicating the temperature of each of the brake fluid 184-1 and 184-2 is supplied to an external drive circuit (not shown) or a control circuit (not shown).

The brake caliper 171, the piston 182-1, the brake pad 183-1, the brake fluid 184-1, the actuators 185-1-1 and 185-1-2, the pistons 186-1-1 and 186-1-2 and the sensor 187. -1, and the system of the cylinder 191-1 and the storage portion 192-1, the piston 182-2, the brake pad 183-2, the brake fluid 184-2, the actuators 185-2-1 and 185-2-2, the piston 186-Since the systems of 2-1 and 186-2-2, the sensor 187-2, and the cylinder 191-2 and the storage section 192-2 are independent, even if one system is failed, the other system can generate a braking force.

In the brake caliper 171, the piston 182-1, the brake pad 183-1, the brake fluid 184-1, the actuators 185-1-1 and 185-1-2, the pistons 186-1-1 and 186-1-2 and System of sensor 187-1 and cylinder 191-1 and storage section 192-1, piston 182-2, brake pad 183-2, brake fluid 184-2, actuators 185-2-1 and 185-2-2, piston. Although it has been described that 186-2-1 and 186-2-2 as well as the sensor 187-2 and the system of the cylinder 191-2 and the storage section 192-2 are independently provided, the invention is not limited to this, and three systems or multiple systems such as four systems can be provided.

Also, in the brake caliper 171, pistons 186-1-1 and 186-1-2 driven by the actuators 185-1-1 and 185-1-2 respectively move into and out of the storage portion 192-1. , Change the internal volume of the storage section 192-1. Further, in brake caliper 171, pistons 186-2-1 and 186-2-2 driven by actuators 185-2-1 and 185-2-2, respectively, move into and out of storage section 192-2. To change the internal volume of the storage section 192-2.

In this way, the actuator 185-1-1 and the piston 186-1-1, and the actuator 185-1-2 and the piston 186-1-2 can exhibit different functions. For example, the actuator 185-1-1 and the piston 186-1-1 correct the internal volume of the storage section 192-1 according to the volume of the brake fluid 184-1, and the actuator 185-1-2 and the piston In 186-1-2, a braking force can be exerted. Also, for example, the actuator 185-1-1 and the piston 186-1-1 exert a braking force as a parking brake, and the actuator 185-1-2 and the piston 186-1-2 receive the braking force during traveling. Can be made to demonstrate. Similarly, the actuator 185-2-1 and the piston 186-2-1 and the actuator 185-2-2 and the piston 186-2-2 can perform different functions.

In the brake caliper 171, the diameter of the piston 186-1-1 and the diameter of the piston 186-1-2 may be the same diameter or different diameters, and the diameter of the piston 186-2-1 The diameter of the piston 186-2-2 may be the same or different.

Further, in the brake caliper 171, the drive method of the actuator 185-1-1 and the drive method of the actuator 185-1-2 may be the same method or different methods. Similarly, in the brake caliper 171, the drive method of the actuator 185-2-1 and the drive method of the actuator 185-2-2 may be the same method or different methods.

The brake fluid 34 or the brake fluid 134-1 or 134-2 or the brake fluid 184-1 or 184-2 may be pressurized by an elastic body such as a spring.

In addition, the brake caliper 125 or the brake caliper 171 may be an opposite type (opposing piston type).

The cylinder body 131 or the cylinder body 181 may have a two-piece structure consisting of two parts or a monoblock structure integrally formed.

Further, each of the actuator 135-1 or 135-2 or the actuators 185-1-1 to 185-2-2 may be driven by a rotary electric motor or driven by a linear motor, or may be driven by a solenoid, or a piezoelectric element.

The oil reservoir is used to store the brake fluid in the cylinder body 131 or the cylinder body 181 and supply the stored brake fluid to the storage portion 142-1 or 142-2 or the storage portion 192-1 or 192-2. It communicates with the storage section 142-1 or 142-2 or the storage section 192-1 or 192-2 through a check valve that flows to the -1 or 142-2 or the storage section 192-1 or 192-2 side and stops the reverse flow A hollow oil reservoir may be provided. By doing this, the brake filled in the cylinder 141-1 or 141-2 or the cylinder 191-1 or 191-2 and the storage portion 142-1 or 142-2 or the storage portion 192-1 or 192-2. The amount of fluid 134-1 or 134-2 or brake fluid 184-1 or 184-2 can be made constant.

Also, the reservoir tank may be provided for storing the brake fluid in the cylinder body 131 or the cylinder body 181 and supplying the stored brake fluid to the storage portion 142-1 or 142-2 or the storage portion 192-1 or 192-2; It communicates with the storage section 142-1 or 142-2 or the storage section 192-1 or 192-2 through a check valve that flows to the 1 or 142-2 or storage section 192-1 or 192-2 side and stops the reverse flow. By doing this, the brake filled in the cylinder 141-1 or 141-2 or the cylinder 191-1 or 191-2 and the storage portion 142-1 or 142-2 or the storage portion 192-1 or 192-2 The amount of fluid 134-1 or 134-2 or brake fluid 184-1 or 184-2 can be keep constant.

In each of the storage unit 42, the storage units 142-1 and 142-2, and the storage units 192-1 and 192-2, the piston 36, the pistons 136-1 and 136-2, and the pistons 186-1-1 and 186- 1-2, 186-2-1 and 186-2-2 are provided with deformable membranes at the portions where they enter and exit, and piston 36, pistons 136-1 and 136-2 and pistons 186-1-1 and 186 are provided. -1-2, 186-2-1 and 186-2-2 are moved into and out of the storage unit 42, storage units 142-1 and 142-2, and storage units 192-1 and 192-2, respectively. 36, pistons 136-1 and 136-2 and pistons 186-1-1, 186-1-2, 186-2-1 and 186-2-2. The film may be deformed according to each position, and the internal volume of each of the storage unit 42, the storage units 142-1 and 142-2, and the storage units 192-1 and 192-2 may be changed. For example, the film can be formed of rubber, resin, or a metal having high elasticity. By doing so, leakage of the brake fluid 34, the brake fluids 134-1 and 134-2, and the brake fluids 184-1 and 184-2 can be more reliably prevented.

In cylinder bodies 31, 131 and 181, the circumferences of storage portion 42, storage portions 142-1 and 142-2 and housings 192-1 and 192-2 are formed so as to be deformable, and cylinder bodies 31, 131 and 131 The storage unit 42, the storage units 142-1 and 142-2 and the storage units 192-1 and 192-2 in 181 are sandwiched between the storage unit 42, the storage units 142-1 and 142-2 and the storage unit 192-. 1 and 192-The internal volume of each of the storage portions 192-1 and 192-2 may be changed.

Thus, the brake caliper 21 is a brake caliper 21 for a disc brake. The brake caliper 21 includes a cylinder body 31, a brake fluid 34, a piston 36 and an actuator 35.

The cylinder body 31 is formed with a cylinder 41 in which a piston 32 for pressing the brake pad 33 is displaceably stored on the side of the brake disc 24 and a hollow storage portion 42 of a predetermined inner volume communicating with the cylinder 41.The brake fluid 34 is filled in the cylinder 41 and the storage portion 42. The piston 36 moves in and out of the storage unit 42 to change the internal volume of the storage unit 42. The actuator 35 electrically drives the piston 36 to move in and out of the storage unit 42. The brake fluid 34 is sealed by the cylinder body 31, the piston 32 and the piston 36 and is isolated from the outside of the brake caliper 21. The brake fluid 34 is sealed by the cylinder body 31, the piston 32 and the piston 36, and can be said to be isolated from the outside of the cylinder body 31.

Since the brake fluid 34 is sealed by the cylinder body 31, the piston 32 and the piston 36 and isolated from the outside, the pressure of the brake fluid 34 is changed only by the drive of the piston 36 by the actuator 35, and the piston 32, and the brake pad 33 is displaced against the brake disc 24, so that the pressure of the brake fluid 34 does not escape due to piping or other pressurizing devices, therefore deceleraton can be controled by only the actuator 35, so can be performed more raliable. Further, the piston 36 is driven to move the actuator 35 into and out of the storage portion 42, and the force of the actuator 35 is transmitted to the piston 32 through the brake fluid 34. If the cross-sectional area of the piston 36 is made larger than the cross-sectional areaof the piston 32, the braking force can be adjusted more finely. so, control for the deceleration operation is more reliably. Since the brake fluid 34 is sealed by the cylinder body 31, the piston 32 and the piston 36 are isolated from the outside, and the brake fluid 34 is not connected to the external piping, consequently the configuration can be more simpler. Since the brake fluid 34 is sealed by the cylinder body 31, the piston 32 and the piston 36 are isolated from the outside, also the brake fluid 34 is not connected to external piping, therefore, can be maintained more easily. Thus, can be more reliable control, simpler configuration, and easier maintenance.

The actuator 35 can displace the piston 36 linearly and enter and exit the storage unit 42.

The piston 36 may be formed in a bar-like shape and may enter and exit the storage unit 42 in the longitudinal direction.

The actuator 84 can displace the angular position of the rotation of the rotor 84 to move the rotor 84 into and out of the storage unit 92.

The rotor 84 can be formed into a sector-shaped column at the bottom, and can be rotatably supported by an axis oriented along the side and passing through the pivot of the sector.

The actuator 35 can be adapted to drive the piston 36 by means of a motor.

The cylinder body 131 has a storage portion 142 in communication with the cylinders 141-1 and 141-2 and the cylinders 141-1 and 141-2 in which the pistons 132-1 and 132-2 are stored displaceably, respectively. The storages 142-1 and 142-2 allow each of the pistons 136-1 and 136-2 to move into and out of each of the storages 142-1 and 142-2, and it makes changing the contents of each of the storages 142-1 and 142-2. It can drive each of the pistons 136-1 and 136-2 to move each of the actuators 135-1 and 135-2 into and out of each of the storage portions 142-1 and 142-2 respectively electrically.

Each of the pistons 186-1-1 and 186-1-2 is moved into and out of the storage portion 192-1 to change the internal volume of the storage portion 192-1. Each of the pistons 186-1-1 and 186-1-2 can be electrically driven to move in and out of the storage section 192-2.

Further, the embodiment of the present invention is not limited to the above-described embodiment, and various modifications can be made without departing from the scope of the present invention, as defined in the claim.

### REFERENCE SIGNS LIST

21 brake caliper, 22 mounting bracket, 23 slide pin, 24 brake disk, 25 hub, 26 wheel, 31 cylinder body, 32 piston, 33 brake pad, 34 brake fluid, 35 actuator, 36 piston, 37 sensor, 41 cylinder, 42 Storage, 51 and 52 wiring, 71 brake calipers, 81 cylinder body, 82 piston, 83 actuator, 84 rotor, 91 cylinder, 92 housing, 101 wiring, 121 axis, 125 brake caliper, 126 mounting bracket, 131 cylinder body, 132-1 and 132-2 piston, 133-1 And 133-2 brake pads, 134-1 and 134-2 brake fluid, 135-1 and 135-2 actuators, 6-1 and 136-2 pistons, 137-1 and 137-2 sensors, 141-1 and 141-2 cylinders, 142-1 and 142-2 enclosures, 151-1 and 151-2 and 152-1 and 152 -2 Wiring, 171 brake caliper, 172 mounting bracket, 181 cylinder body, 182-1 and 182-2 piston, 183-1 and 183-2 brake pad, 184-1 and 184-2 brake fluid, 185-1-1, 185-1 -2, 185-2-1 and 185-2-2 actuators, 186-1-1, 186-1-2, 186-2-1 and 186-2-2 pistons, 187-1 and 187-2 sensors, 191-1 and 191-2 cylinders, 192-1 and 192-2 Housing, 201-1-1, 201-1-2, 201-2-1, 201-2-2 and 202-1 and 202-2 wiring

## Claims

1. A brake caliper (21, 71, 125, 171) for a disc brake, having a below mentioned characteristics and including:
a cylinder body (31, 81, 181) in which a piston (32, 132, 182) that presses a brake pad (33, 133, 183) on the disc side is slidably stored, and a hollow storage portion (42, 92, 142, 192) having a predetermined internal volume communicating with the cylinder (41, 141, 191);
brake fluid (34, 134, 184) filled in the cylinder (41, 141, 191) and the storage portion (42, 92, 142, 192);
an internal volume changing means for moving in and out of the storage portion (42, 92, 142, 192)to change the internal volume of the storage portion (42, 92, 142, 192); and
driving means (35) for electrically driving the internal volume changing means so as to enter and exit the storage portion (42, 92, 142, 192);
**characterised in that** it comprises a sensor (37, 137, 187) provided in the cylinder body (31, 81, 181) for detecting the position of the internal volume changing means or for detecting the pressure of the brake fluid (34, 134, 184) or for detecting the temperature of the brake fluid (34, 134, 184);
the brake fluid (34, 134, 184) being sealed with the cylinder body (31, 81, 181), the piston (32, 132, 182), the internal volume changing means and the sensor (37, 137, 187), and being isolated from the outside of the cylinder body (31, 81, 181).

## Patentansprüche

1. Bremssattel (21, 71, 125, 171) für eine Scheibenbremse mit den unten genannten Eigenschaften und umfassend:
einen Zylinderkörper (31, 81, 181), in dem ein Kolben (32, 132, 182), der einen Bremsbelag (33, 133, 183) auf die Scheibenseite drückt, verschiebbar gelagert ist, und einen hohlen Lagerungsabschnitt (42, 92, 142, 192) mit einem vorbestimmten Innenvolumen, das mit dem Zylinder (41, 141, 191) in Verbindung steht;
Bremsflüssigkeit (34, 134, 184), die in den Zylinder (41, 141, 191) und den Lagerungsabschnitt (42, 92, 142, 192) gefüllt ist;
ein Innenvolumen-Änderungsmittel zum Hinein- und Herausbewegen in den Lagerungsabschnitt (42, 92, 142, 192), um das Innenvolumen des Lagerungsabschnitts (42, 92, 142, 192) zu ändern; und
Antriebsmittel (35) zum elektrischen Antreiben des Innenvolumen-Änderungsmittels, um in den Lagerungsabschnitt (42, 92, 142, 192) einzutreten und auszutreten;
**dadurch gekennzeichnet, dass** er umfasst
einen Sensor (37, 137, 187), der in dem Zylinderkörper (31, 81, 181) zum Erfassen der Position des Innenvolumen-Änderungsmittels oder zum Erfassen des Drucks der Bremsflüssigkeit (34, 134, 184) oder zum Erfassen der Temperatur der Bremsflüssigkeit (34, 134, 184) vorgesehen ist;
wobei die Bremsflüssigkeit (34, 134, 184) mit dem Zylinderkörper (31, 81, 181), dem Kolben (32, 132, 182), dem Innenvolumen-Änderungsmittel und dem Sensor (37, 137, 187) abgedichtet ist, und von der Außenseite des Zylinderkörpers (31, 81, 181) isoliert ist.

## Revendications

1. Un étrier de frein (21, 71, 125, 171) pour un frein à disque, ayant les caractéristiques mentionnées ci-dessous et comprenant :
un corps de cylindre (31, 81, 181) dans lequel un piston (32, 132, 182) qui presse une plaquette de frein (33, 133, 183) sur le côté du disque est stocké de manière coulissante, et une partie de stockage creuse (42, 92, 142, 192) ayant un volume interne prédéterminé communiquant avec le cylindre (41, 141, 191) ;
un liquide de frein (34, 134, 184) versé dans le cylindre (41, 141, 191) et
la partie de stockage (42, 92, 142, 192) ;
des moyens de changement de volume interne pour entrer et sortir de la partie de stockage (42, 92, 142, 192) afin de changer le volume interne de la partie de stockage (42, 92, 142, 192) ; et
des moyens d'entraînement (35) pour entraîner électriquement les moyens de changement de volume interne de manière à entrer et sortir de la partie de stockage (42, 92, 142, 192) ;
**caractérisé en ce qu'**il comprend
un capteur (37, 137, 187) prévu dans le corps de cylindre (31, 81, 181) pour détecter la position des moyens de changement de volume interne ou pour détecter la pression du liquide de frein (34, 134, 184) ou pour détecter la température du liquide de frein (34, 134, 184) ; le liquide de frein (34, 134, 184) étant enfermé par le corps du cylindre (31, 81, 181),
le piston (32, 132, 182), les moyens de changement de volume interne et le capteur (37, 137, 187), et étant isolé de l'extérieur du corps du cylindre (31, 81, 181).
